(19) **Europäisches Patentamt / European Patent Office / Office européen des brevets**

(11) **EP 2 282 406 B1**

(12) **EUROPEAN PATENT SPECIFICATION**

(45) Date of publication and mention
of the grant of the patent:
**20.04.2016 Bulletin 2016/16**

(51) Int Cl.:
*H04B 1/12* (2006.01)  *H04L 25/02* (2006.01)

(21) Application number: **10169807.4**

(22) Date of filing: **16.07.2010**

(54) **Receiver for signal communications with disturbances rejection**

Signalempfänger mit Störungsunterdrückung

Récepteur de signaux avec suppression d'interférence

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **31.07.2009 IT MI20091382**

(43) Date of publication of application:
**09.02.2011 Bulletin 2011/06**

(73) Proprietor: **STMicroelectronics Srl
20864 Agrate Brianza (IT)**

(72) Inventors:
• **Giombanco, Salvatore
96010, CASSARO (SR) (IT)**

• **Grande, Michele
96012, AVOLA (SR) (IT)**
• **Lombardo, Giovanni
91011, ALCAMO (TP) (IT)**
• **Tumminaro, Salvatore
93010, MARIANOPOLI (CL) (IT)**
• **Marino, Filippo
95030, TREMESTIERI ETNEO (CT) (IT)**

(74) Representative: **Bosotti, Luciano et al
Buzzi, Notaro & Antonielli d'Oulx S.r.l.
Via Maria Vittoria, 18
10123 Torino (IT)**

(56) References cited:
**EP-A2- 1 087 333    US-A- 5 389 778
US-A- 5 568 561    US-A1- 2005 110 700**

**Description**

The present invention relates to a receiver for a signal communication system with a disturbance rejection circuit.

It is known the presence of galvanic isolation in applications in which the communication between circuits operating at high supply voltages (even hundreds of volts) and circuits rather operating at low supply voltages is required; the galvanic isolation must ensure the safety of the user coming in contact with the low voltage interface. The applications needing such a requirement are typically those regarding the power suppliers directly bonded to the power network, but also the industrial applications in which driving high voltage loads is required.

A typical example are the "high side switch drivers" in which driving switches feeding inductive loads by means of high voltages is required. In such a case the potential differences that may dynamically develop between the low voltage part and the high voltage part may also reach the thousands of volts per microsecond.

Several apparatus for achieving the galvanic isolation presently exist.

One of these consists in using an integrated transformer. The latter is made of a pile structure in which the secondary winding generally consists of the metal layer arranged at the lowermost level, the primary winding consists of the metal layer arranged at the uppermost level and the isolation between the two windings consists of several layers of dielectric arranged between the two metal layers the thickness of which depends on the desired isolation level. Alternatively, the secondary winding may be made of the metal layer arranged at the uppermost level, the dielectric layer is inserted thereon and the primary winding is finally made of an additional metal layer. The isolation transformer is made on the die of the receiver. The die driver contains the transmitter that, through the bonding, is bonded to the primary of the isolation transformer. The secondary of the transformer is bonded to the receiver that processes the transmitted signal. The data flow may also occur from the secondary to the primary, in case of constructing a two-way channel. In order to transfer information through the isolated interface, the signals must be conveniently processed by a modulation technique. This type of component permits to obtain a high bit rate, good reliability and isolation capacity. This configuration requires, however, the addition of processing steps to construct the transformer (e.g. for increasing the thickness of the isolating layer in order to achieve the suitable isolation rate), as well as the use of bonding wires for bonding the transmitter of the die driver to the transformer itself.

Another galvanic isolation apparatus comprises a structure based on a transmission of the wireless type and it is described in patent US 2008/0311862. The two chips are assembled one on top of the other and the isolation is achieved through an interposed isolating layer. The electromagnetic coupling is obtained trough a couple of turns, particularly by means of the magnetic field produced by the power flowing on the transmitting turn. The thickness of the upper chip (e.g. the chip of the transmitter) is decreased, by lapping, to maximize the coupling between the two turns. In order to transfer information through the isolated interface, the signal must be conveniently processed by a modulation technique. This configuration has the advantage of not requiring additional processing steps as well as bonding wires between the two chips. It has however the disadvantage of a low coupling coefficient and its high variability, depending on the thickness tolerance after the die lapping, the tolerance of isolating layer thickness and the tolerance of the alignment between the two chips.

A further galvanic isolation apparatus comprises a structure based on a transmission of the wireless type and it is still described in patent US 2008/0311862. The two chips, in this case, are assembled side-by-side and the isolation is made through an isolating layer placed under the two chips. The electromagnetic coupling is achieved through a couple of turns, particularly by means of the magnetic field produced by the power flowing on the transmitting turn. In order to transfer information through the isolated interface, the signals must be conveniently processed by a modulation technique. This configuration also has the advantage of not requiring additional processing steps as well as bonding wires between the two chips. It has however the disadvantage of a coupling coefficient which is lower than the previous structure and highly variable according to the tolerance of the alignment between the two chips and the tolerance of the distance between the two chips.

An inherent problem of structures with coupled inductors is the presence of parasite capacitances between the inductors themselves. These capacitances introduce an unwanted capacitive coupling between the turns thus causing currents (proportional to the parasite capacitances according to the formula $I = C\dfrac{dv}{dt}$ ) at potential variations between the transmission and reception circuits.

The faster the potential variation, the higher these currents are (they may also be of the order of tens of kV/us) and the input impedance being non-null, they change the bias of the receiver circuits thus causing the loss of data and possibly the breakage thereof. This phenomenon is commonly referred to as noise due to a common-mode transient.

The turns of said galvanically isolated interfaces have electric features assimilable to those of a transformer and therefore the transmitting turn may be denoted as primary and the receiving turn may be denoted as secondary.

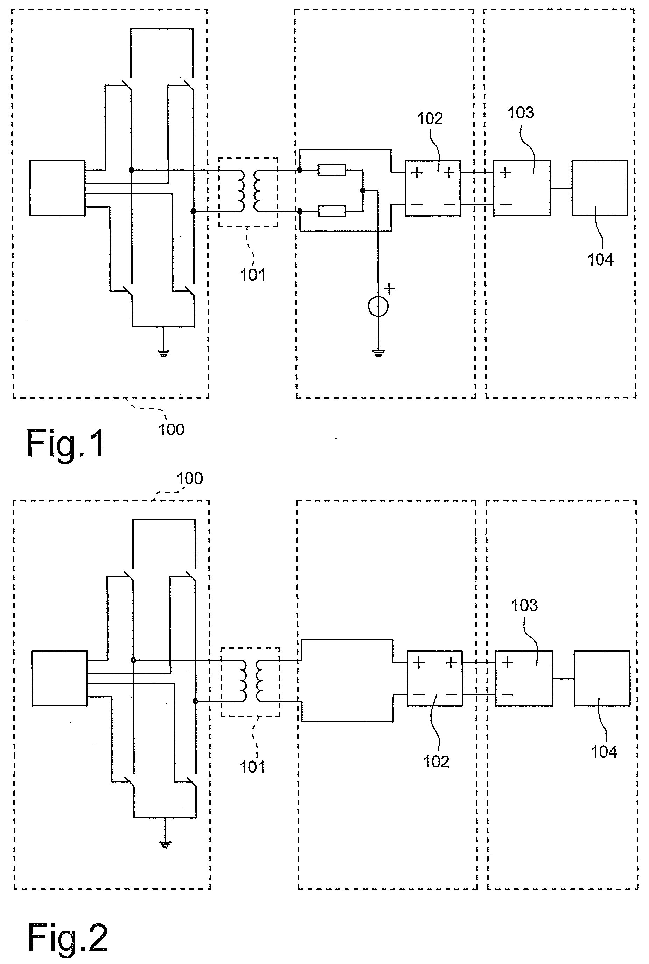

The data transmission through the primary and the secondary is usually achieved by means of a modulated radiofrequency signal or by sending current pulses. A circuit diagram of a typical transmitter-receiver architecture in which micro antennas are used, is shown in figures 1 and 2 (in these figures the microantennas are schematized as inductors). The transmitter-receiver system comprises a transmitter 100, an interface 101, a receiver comprising an amplifier 102, a comparator 103 and a logic circuitry 104.

The diagrams shown display a differential architecture both to the primary and to the secondary, such a solution permits to obtain a higher immunity to common-mode disturbances. According to a variation of the shown diagram, one or both the inductors have a terminal each referred to its ground GND.

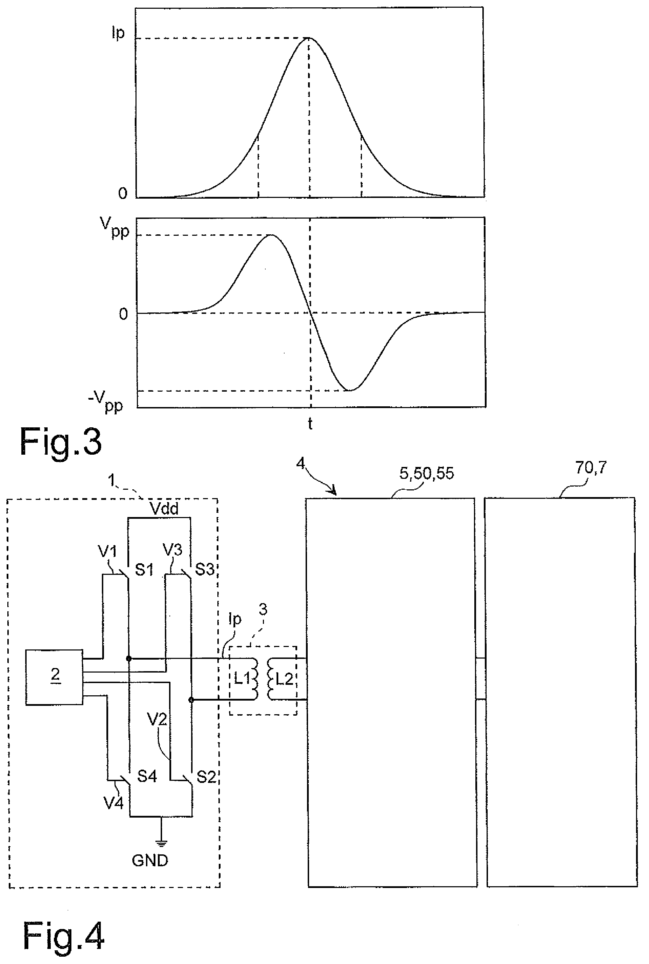

In order to better understand how this type of architecture may be exploited to transmit information, it is useful to observe the waveforms related to the transmission of a current pulse Ip through coupled inductors, as seen in figure 3.

The voltage at the receiver has a positive pulse with a maximum width Vpp followed by a negative one with a minimum width -Vpp, when the current pulse Ip to the transmitter is positive and vice versa if the current pulse is negative. Therefore, by associating information with the current pulse orientation, data may be transmitted through the isolation interface.

A typical coding/decoding technique consists in associating a positive (negative) current pulse with a positive (negative) side of a logic signal, as described in patent US2008/0069249. The signal received at the secondary is amplified before being decoded; if the coupling coefficient of the two inductors is sufficiently great, the signal at the secondary may have a sufficiently wide width to permit the decoding without using the amplifier stage. Using current pulses for transmitting the signal permits to decrease the system consumptions and increase the transmission bit rate. Furthermore, by exploiting both pulses at the secondary, the signal transmission may be strengthened thus making the decoding more reliable.

By generating a transmission current pulse with a convenient Gaussian form, a waveform may be obtained at the secondary with pulses of the desired duration thus minimizing the system current consumptions. The used technology imposes a limit lower than the pulse duration, as the band of the received signal being inversely proportional to the duration of the transmitted pulse, it is necessary to prevent it from urging the resonance frequency of the receiver (basically depending on parasites).

Furthermore if the pulse duration is lower than or comparable to the time constant of the inductor (depending on its inductance and the parasite series impedance), the received signal will have the second pulse more weakened than the first, which represents a limitation from the point of view of the strength of the system in the presence of disturbances. Indeed, noises injected into the receiver from close circuits which are particularly noisy (due to an imperfect symmetry in the layout of the differential circuits) may be detected as pulses from the transmitter and therefore erroneously decoded. This problem may be obviated by duplicating the information, i.e. by transmitting two consecutive pulses which code the same data and minimizing the possibility that the noise pulse is decoded as valid, but this results in decreasing the maximum bit rate. Therefore, the optimal duration of the pulse must be higher than the typical time constant of the inductor and must be such that the received signal does not urge the typical resonance frequency of the receiver.

Document EP 1 087 333 A2 discloses a contactless IC card that performs envelope detection on an ASK-modulated carrier wave and demodulates the carrier wave to recover data piggybacked thereon. Demodulation is suspended during periods where there is no possibility of a change of a data value (from data 0 to data 1, or from data 1 to data 0) in the digital data, so that incorrect data recovery can be prevented even when noise arises in power supply voltage waveform.

Document US 5 568 561 A1 discloses a bootstrapped audio line receiver that receives a differential-mode input signal from first and second differential lines and outputs a single-ended signal on an output line. The input amplifier also includes an rf filter that removes rf noise without adversely affecting the line receiver's common-mode noise rejection at audio frequencies.

Document US 5 389 778 A discloses a photoelectric conversion circuit which can detect only signal light from applied light, to avoid influence by disturbance light. A photoelectric conversion current caused by disturbance light is removed in a tuning circuit, so that only a photoelectric conversion current caused by signal light is detected.

Finally, US 2005/110700 A1 discloses a method for transmitting and receiving signals using an antenna element electrically connected to a driver and an amplifier. Receiving the second signal includes reducing the input impedance of the amplifier, and receiving the second signal at the amplifier through the reduced input impedance.

In view of the state of the art, it is an object of the present invention to provide a receiver for a signal communication system with a disturbance rejection circuit allowing the receiver to be more noise-immune.

The invention is defined by the features of claim 1. Further embodiments are defined by the dependent claims.

In accordance with the present invention, such an object is achieved by a receiver of a signal communication apparatus, said apparatus comprising a transmitter for transmitting signals, said receiver for receiving the signals and a galvanically isolated wireless interface interposed between the transmitter and the receiver and comprising a transmitting antenna and a receiving antenna, said receiver comprising an input stage for receiving the transmitted signal and another stage to receive the signal deriving from the input stage, wherein said input stage comprises a disturbance rejection circuit coupled with the receiving antenna and configured for compensating for the parasite currents flowing between the transmitting antenna and the receiving antenna at the potential variations between the input and the output of the galvanic isolation interface by reducing the impedance of the input stage, wherein said input stage is adapted to decrease the input impedance in the presence of parasite current due to common-mode transient and comprises means adapted to change the bias of the input stage as a function of the parasite currents.

The features and advantages of the present invention will be apparent from the following detailed description of a practical embodiment thereof, shown by way of non-limiting example in the accompanying drawings, in which:

figure 1 shows a communication system with a galvanic isolation interface in a differential configuration both to the primary and to the secondary;
figure 2 shows a communication system as shown in figure 1 but with a current amplifier;
figure 3 shows the waveform of a current pulse transmitted by the primary and the corresponding waveform of the signal received at the secondary;
figure 4 shows a communication system with a galvanic isolation interface in accordance with the present invention;
figure 5 shows a diagram of the logic circuitry of the communication system transmitter of figure 4;
figure 6a shows the receiver for a communication system in accordance with a first embodiment of the invention;
figure 6b shows the receiver for a communication system in accordance with a variation of the first embodiment of the invention;
figure 7 shows a circuit implementation of the amplifier of figure 6a or 6b;
figure 8 shows another circuit implementation of the amplifier of figure 6a or 6b;
figure 9 shows a block diagram of the input stage of the receiver in figure 6a or 6b in accordance with a variation of the first embodiment of the invention;
figure 10a is a circuit diagram of the input stage in figure 9;
figure 10b is another circuit diagram of the input stage in figure 9;
figure 11 shows the receiver for a communication system in accordance with a second embodiment of the invention;
figure 12 shows the time diagrams of the signals involved in the comparator block of the discriminator in figure 11 in the presence of disturbances;
figure 13 shows a more detailed logic block of the discriminator in figure 11;
figure 14 shows the time diagrams of the signals involved in the comparator block of the discriminator in figure 11 in the absence of disturbances;
figure 15 shows the time diagrams of the signals involved in the discriminator in figure 11 in the absence of disturbances;
figure 16 shows the receiver for a communication system in accordance with a third embodiment of the invention.

Figure 4 shows a communication system with a galvanic isolation interface in accordance with the present invention. Said system is of the differential type both in transmission and in reception but it may also be of the non-differential type. The system comprises a transmitter 1 with a logic circuitry 2 receiving at the input the data to be transmitted and the synchronizing signal (the clock) and generates a coded signal, preferably, at the clock sides, a current pulse Ip as shown in figure 3. The pulse direction denotes the logic level of the data to be transmitted. The transmitter comprises four switches S1-S4, S2-S3 in a bridge configuration bonded between the voltage Vdd and the ground GND and having the middle points bonded to the primary L1, i.e. to the transmitting antenna or turn of the integrated, galvanic isolation interface 3 preferably of the wireless type. The switches are driven by the logic circuitry 2 by means of the signals VI-V4; the logic circuitry 2 is adapted to switch off the switches S1, S2 to generate the current pulse Ip which codes data at a high (or low) logic level and the switches S3, S4 for coding data at a low (or high) logic level. By conveniently controlling the signal sides V1-V4, the waveform of the current pulse Ip may be modeled such that it approximates a Gaussian pulse with the desired duration, as described in figure 3.

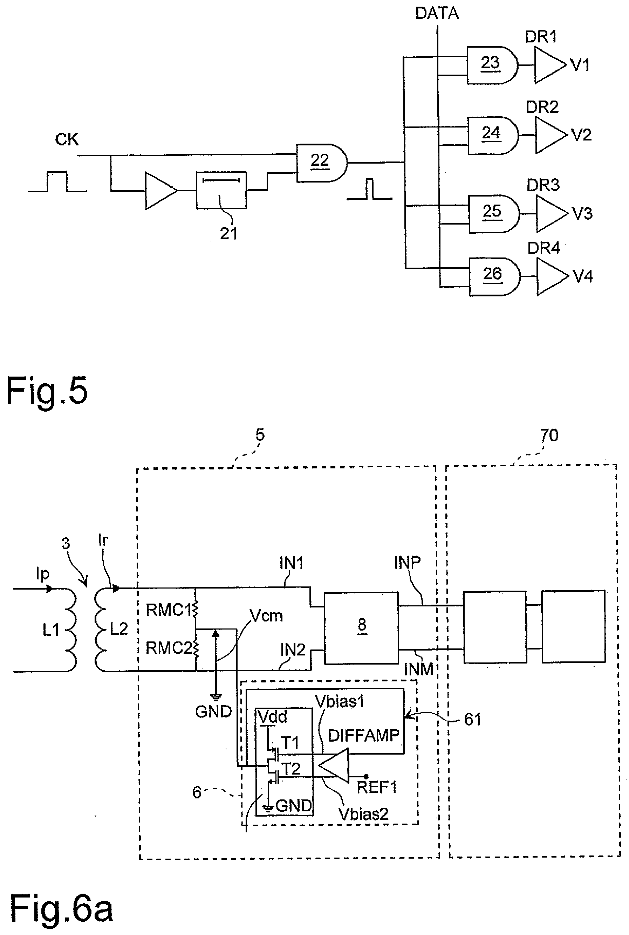

A possible implementation of the logic circuitry 2 of the transmitter is shown in figure 5. At the positive side of the clock signal CK, a pulse of about the same duration as the current pulse to be transmitted is generated, through the delay cell 21 and the AND-type logic port 22. The signal at the output of the AND port 22 is sent to four AND ports 23-26 also having at the input the data signal DATA, the AND ports 23-26 implement a demultiplexer generating four signals according to the logic level of the data to be transmitted. These signals are at the input of four drivers DR1-DR4 which generate the signals V1, V2, V3, V4 for driving the switches S1-S4. The four drivers DR1-DR4 are conveniently dimensioned to generate the Gaussian current pulse Ip. In the absence of transmission, the switches S2 and S4 are switched off, this ensures that in the presence of common-mode transients between the primary winding L1 and the secondary winding L2, i.e. the receiving antenna or turn of the interface 3, the currents flowing are "conveyed" towards the ground GND. The turns L1 and L2 have electric features assimilable to those of a transformer.

The system comprises a receiver 4 preferably provided with an input stage 5, 50, 55 which amplifies the signal Ir present on the secondary L2 of the interface 3; if the transmitted signal is the signal Ip, the signal Ir has a positive pulse with a maximum width Vpp followed by a negative pulse with a minimum width -Vpp, when the current pulse Ip to the transmitter is positive and vice versa if the current pulse is negative. The receiver is provided with a decoder 70 which decodes the received pulses and reassembles the data signal DATA and the clock signal CK.

In accordance with a first embodiment of the invention, the input stage 5, 50 comprises a circuit for rejecting the common-mode transients, i.e. adapted to decrease the input impedance in the presence of parasite currents due to a common-mode transient and therefore adapted to compensate for the parasite currents flowing between the transmitting turn and the receiving turn at the potential variations between the input and the output of the galvanic isolation interface. The input stage 5, 50 comprising even means 53 adapted to change the bias of the input stage as a function of the parasite currents.

The approaches used for implementing the input stage are of two types: one consists in amplifying the currents outputted from the secondary, the other consists in amplifying the voltage at its ends.

In accordance with the first embodiment of the present invention, at the input stage 5 to the differential received signal Ir a common-mode component is added as needed to bias the amplifier through the resistors RMC1 and RMC2 and the output Vcm of the circuit 6 for rejecting the common-mode transients and for the common-mode voltage biasing, as shown in figure 6a. The latter provides the voltage Vcm at the output, between the common terminal of the two resistors RMC 1 and RMC2 and the ground GND, adjusted to the reference value REF1 and capable of compensating for the parasite currents flowing between the primary L1 and the secondary L2 of the interface 3 at the potential variations between input and output of the galvanic isolation interface.

Circuit 6 preferably comprises a closed-loop buffer 61 but an open-loop buffer or any other solution may also be used, provided that it has the features previously defined. The closed-loop buffer 61 comprises a differential stage DIFFAMP driving the output stage 62 consisting of the series of two transistors T1 and T2, arranged between the supply voltage Vdd and the ground GND, capable of providing (or taking up) the currents due to the parasite effects; the signals Vbias1 and Vbias2 from the differential stage DIFFAMP drive the PMOS transistor T1 and the NMOS transistor T2, respectively. The voltage Vcm is the voltage on the common output terminal of the transistors T1 and T2 and the differential stage has the voltage Vcm on the inverting input terminal and the voltage REF1 on the non-inverting input terminal.

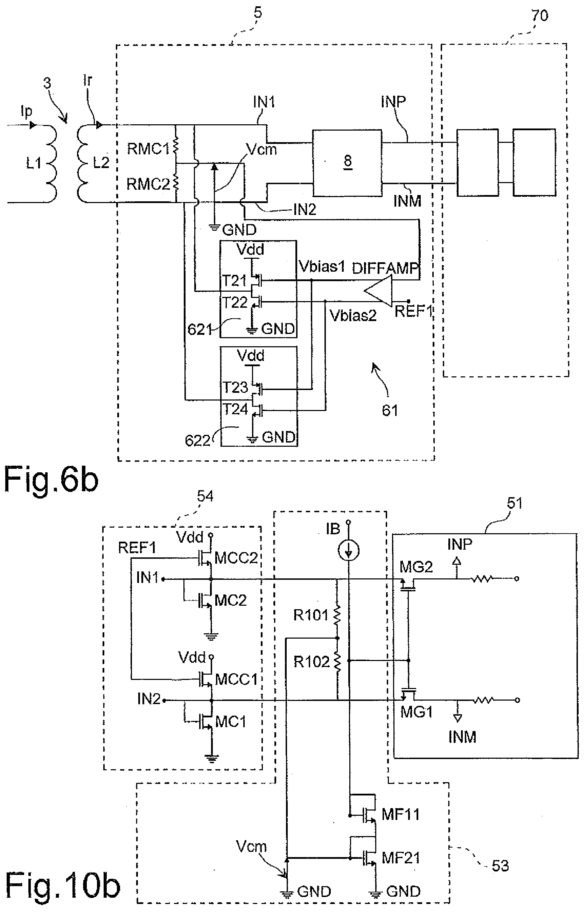

In accordance with a variation of the first embodiment of the present invention shown in figure 6b, circuit 6 comprises a buffer 61 comprising a differential stage DIFFAMP driving two output stages 621 and 622, each consisting of a series of two transistors T21, T22 and T23, T24, arranged between the supply voltage Vdd and the ground GND, capable of providing (or taking up) the currents due to the parasite effects, the signals Vbias1 and Vbias2 from the differential stage DIFFAMP drive the PMOS transistor T21, T23 and the NMOS transistor T22, T24, respectively. The voltage Vcm is the voltage on the common output terminal of the transistors T1 and T2. The differential stage has the voltage Vcm on the inverting input terminal and the voltage REF1 on the non-inverting input terminal and the outputs of the two stages 621 and 622 are bonded to the terminals of the inductance L2.

Input stage 5 preferably comprises an amplifier 8 which may be implemented in different ways, in general, its function is amplifying the high frequency components of the signal Ir by keeping the direct current component unaltered.

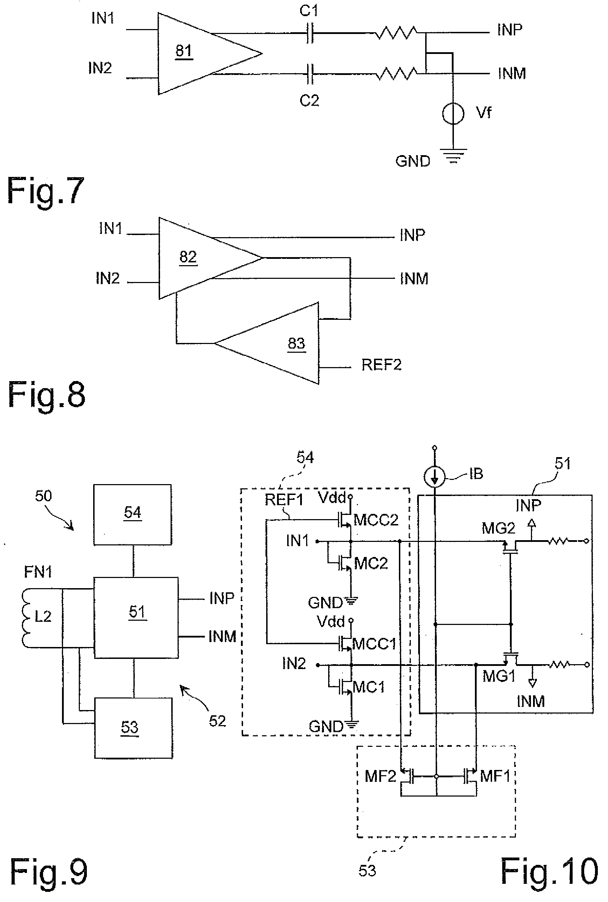

A first implementation of the amplifier 8, shown in figure 7, comprises a wideband voltage differential amplifier 81 with a cut-off frequency of about 2fp, with fp being a band-centre frequency of the signal Ir received at the secondary L2 and at the input of the terminals IN1 and IN2. The output direct current component on the terminals INP and INM is filtered through the capacitances C1 and C2 and applied again through the tension generator Vf to permit the correct bias of the circuit downstream of the amplifier.

A second implementation of the amplifier 8, shown in figure 8, comprises a fast comparator 82 fed back with an error amplifier 83 which resets the offset of the signal Ir at the input of the terminals IN1 and IN2 and keeps the direct current component of the signal at the output of the terminals INP and INM at the value required to polarize the circuit downstream of the amplifier. The error amplifier 83 is adapted to compare the signal at the output of the fast comparator 82 to a reference signal REF2.

In accordance with another variation of the first embodiment of the invention, if the signal to be amplified on the secondary L2 is a current signal, using a current amplifier circuit is needed; figure 9 describes a different input stage 50 usable in the receiver in figure 4 and considered as a variation of the input stage 5. It comprises a transimpedance stage 51 to amplify the current signal Ir received and present on the secondary L2 and from a stage 52 for rejecting the noises due to the common-mode transients. In particular, the rejection stage 52 comprises a common-mode disturbance rejection circuit 54 which takes up the inputting currents and which allows reducing the overvoltages and the undervoltages at the differential input; the circuit 54 comprises, for example, a clamp circuit. The stage 52 comprises means 53 for biasing the common-mode of the received signal, for example a common-mode voltage follower 53 adapted to modify the bias of the transimpedance stage 51 in order to balance the effect of the parasite currents.

The transimpedance stage 51, as better seen in figure 10a, comprises MOS transistors MG1 and MG2 which are polarized in a common-gate configuration. The common-mode disturbance rejection circuit 54 has the MOS transistors MC1 and MC2 taking up the common-mode currents inputted from the terminals of the secondary L2 and the MOS transistors MCC1-MCC2 providing the currents outputted from the abovementioned terminals. The presence of the common-mode disturbance rejection circuit 54 only may not to be sufficient to oppose the effect of the currents due to the common-mode transients; for such a reason stage 53 has been added, permitting to dynamically modify the bias of the transistors MG1-MG2 to increase the current they dispense towards the input terminals IN1 and IN2. The input terminals IN2 and IN1 are bonded to respective source terminals of the transistors MG1 and MG2, respective gate and drain terminals of MOS transistors MC1 and MC2, and respective source terminals of the transistors MF1 and MF2 belonging to stage 54. The latter comprises the differential stage of the two transistors MF1 and MF2 having the gate and drain terminals in common. The MOS transistors MC1 and MC2 have the source terminals bonded to the ground GND and the drain terminals bonded to the respective source terminals of the transistors MCC1-MCC2 having the drain terminals bonded to a supply voltage VDD and the gate terminals bonded to the reference voltage REF1. The drain terminals of the transistors MG1 and MG2 are the output terminals INP and INM of the amplifier circuit 50; a bias current IB is sent to the common gates of the transistors MG1-MG2 and MF1-MF2.

Alternatively, as seen in figure 10b, stage 53 may be obtained by the series of two resistors R101 and R102 bonded between the terminals IN1 and IN2 and the series of two transistors MF11 and MF21 having the drain terminals bonded to the respective gate terminals and the source terminal of the transistor MF21 bonded to the ground GND and the drain terminal bonded to the source terminal of the transistor MF 11 having the drain terminal bonded to the bias current generator IB and the gate terminals of the transistors MG1 and MG2. The common-mode voltage Vcm insists on the gate terminal of the transistor MF22.

The signal at the output of the input stage 5, 50 is sent to a decoder 70 of the known type for decoding the received signal.

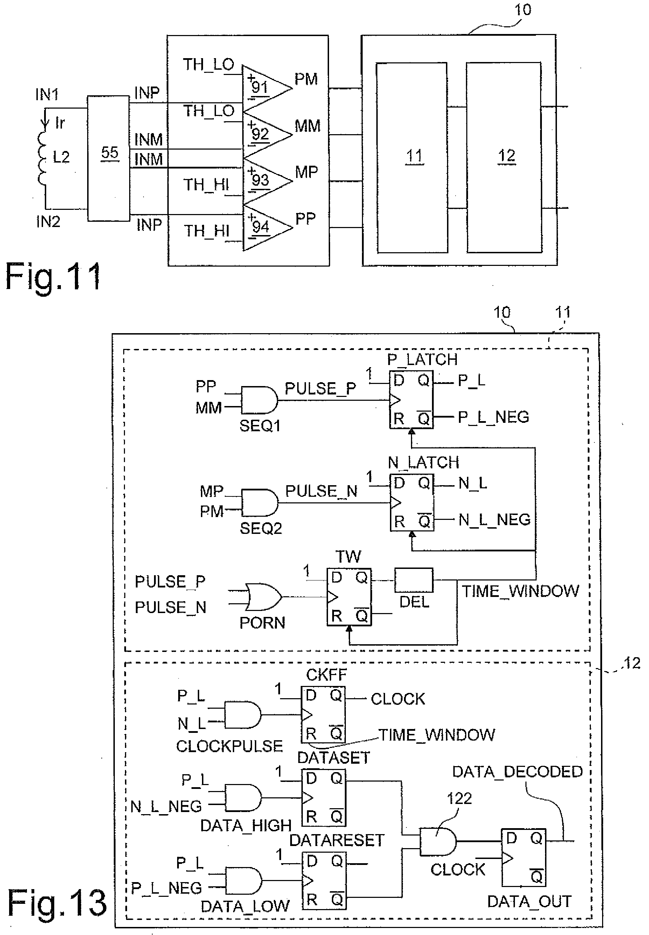

In accordance with a second embodiment of the invention, the signal Ir present on the receiving turn L2 and amplified by an amplifier of the known type 55 is sent through the terminals INP and INM to a discriminator stage 7 adapted to decode the received signals and best shown in figure 11. If amplifying the signal Ir present on the turn L2 is not required, the inputs INP and INM of the discriminator 7 match with the terminals IN1 and IN2 of the turn L2.

Said discriminator 7 comprising means 9, 11 capable of triggering decoding means 12 of the received signal only if the value of the waveform of the received signal Ir is outside a logic hysteresis consisting of a first logic threshold (TH_LO) having a value smaller than the value of the direct current component Irdc of the received signal and a second logic threshold (TH_HI) having a value greater than the value of the direct current component of the received signal.

The discriminator stage 7 comprises a comparator stage 9 and a logic block 10. If the signal Ir is a differential signal, the comparator stage 9 comprises four comparators 91-94 adapted to turn the pulses of the differential signal Ir at the input through the terminals INP and INM into four logic pulses PM, MM, MP and PP comparing the input signals to the reference logic thresholds TH_LO and TH_HI, the threshold TH_HO of which has a value smaller than the direct current component of the differential signals INP and INM, while the threshold TH_HI has a value greater than the direct current component of the signals INP and INM. Thereby, a voltage range is targeted within which the signal variations are ignored. By conveniently adjusting these thresholds, a part of the noise at the input of the receiver or possibly introduced by the amplifier itself may be filtered. The logic block 10, according to the order of reception of the signals PM, MM, MP and PP, decodes the data and generates an output clock which is synchronous with the decoded data.

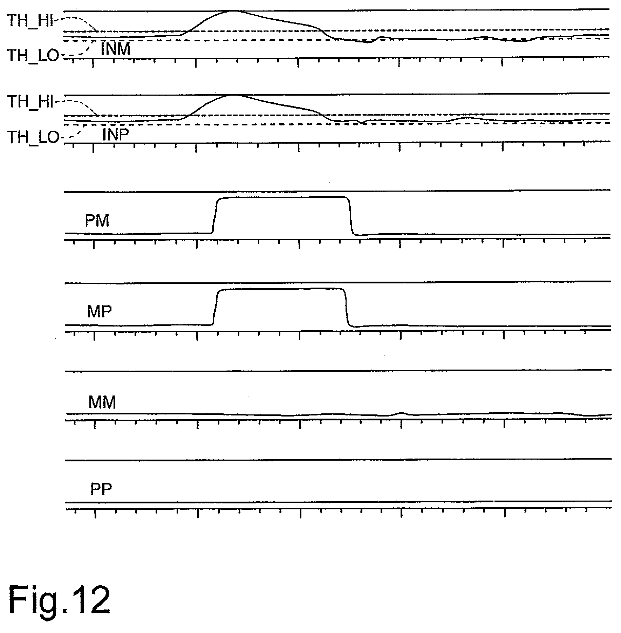

However, this expedient is not enough to avoid possible disturbances from being interpreted as useful signals. Indeed, a common-mode noise could be introduced from the outside of the amplification chain through the ground or power supply or due to an imperfect symmetry of the layout of the differential circuits. If the width of this noise is such that both the signal INP and the signal INM are either above or below the thresholds, the comparators 91-94 switch and thus generate logic signals that could be interpreted as a useful signal, as seen in figure 12. For this reason performing a time sequence control of the logic signals is required to filter a possible disturbance.

The discriminator 7 and in particular the logic block 10 is preferably further capable of targeting possible spurious input signals caused by disturbances. Indeed, if the sequence of the received pulses does not meet the predicted order, the received data and the corresponding clock are considered invalid and thus ignored.

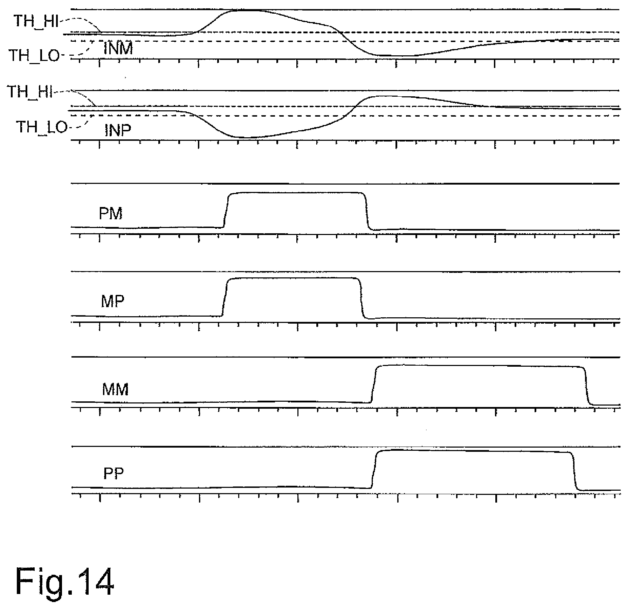

The logic block 10 preferably comprises other means SEQ1, SEQ2 adapted to allow pulses to be generated for decoding the received signal only if the generation of a logic signal due to the comparison of the first component INP of the differential signal with one of the first logic threshold TH_LO or the second logic threshold TH_HI corresponds to the generation of a logic signal due to the comparison of the second component INM of the differential signal with the other of the first or second logic threshold. Indeed, the logic circuit 10 comprises a circuit 11 which comprises, in turn, as shown in figure 13, two AND logic ports SEQ1 and SEQ2 having at the input the signals PM, MM, MP and PP and having at the output logic pulses PULSE_P and PULSE_N only if the sequence is that shown in figure 14. Otherwise, if there is a disturbance, as shown in figure 12, the output of the AND port SEQ1 remains zero.

Furthermore the presented system introduces a further grade of disturbance immunity.

Discriminator 7 still preferably comprises control means adapted to set up a given time period TIME_WINDOW starting from the generation of the first pulse PULSE_P or PULSE_N of said other means; the control means are adapted to check whether within said time period the second pulse PULSE_N or PULSE_P is generated and are adapted to trigger said decoding means of the received signal only if the check result is positive. Circuit 11 is adapted to implement the control function on the time sequence of the logic signals. Indeed, the signals PULSE_P and PULSE_N are at the input of two latches P_LATCH and N_LATCH having at the output the signals P_L, P_L_NEG and N_L, N_L_NEG. The signals PULSE_P and PULSE_N are at the input of a NOR port POR_N, the output of which is at the input of another latch TW; the output Q of the latch TW is at the input of a delay cell DEL adapted to provide the time window TIME_WINDOW as the reset signal R of the latches TW, P_LATCH and N_LATCH. If a first couple of pulses between the pulses PM, MM, MP and PP meeting the described conditions comes, the time window TIME_WINDOW, the duration of which depends on the expected duration of the pulses, is started. If within such a time window the predicted couple of pulses comes, the clock signal and the data synchronous therewith is decoded. Whether the second couple of pulses did not present within the window, the signal which generated the first couple of pulses would be interpreted as a disturbance and thereby clock and data would not be decoded. The clock and data recovery circuit 12 comprises an AND port CLOCKPULSE having at the input the signals P_L and N_L and the output of which is at the input of the latch CKFF providing the clock signal CLOCK; therefore, said clock signal CLOCK is decoded through the logic port CLOCKPULSE and the latch CKFF only if the two couples of pulses are correctly received.

Therefore, the discriminator 7 may have three filtering levels of disturbances: a hysteresis between the detection thresholds of the pulses within which the differential noise or the common-mode noise is ignored, the need for the first couple of pulses to come according to the sequence in figure 14, the need for the second couple of pulses to come according to the sequence in figure 14.

Furthermore, the time window TIME_WINDOW ensures that the system does not indefinitely keep on waiting for the second couple of pulses.

The same device 12 allows the data to be decoded. The device 12 comprises an AND port DATA_HIGH having at the input the signals P_L and N_L_NEG and the output of which is at the input of the latch DATASET, the output Q of which is at the input of an AND port 122. The device 12 also comprises an AND port DATA_LOW having at the input the signals N_L and P_L_NEG and the output of which is at the input of the latch DATARESET, the output Q denied of which is at the input of the AND port 122. A further latch DATA_OUT has the output of the port 122 at the input D carrying the data at the output by means of the signal DATA-DECODED only if the clock signal CLOCK is present at the input, i.e. only if the clock signal CLOCK is decoded.

A receiver 4 may be implemented, comprising the input stage coupled to the turn L2 and provided with the disturbance rejection circuit 6 or the circuit consisting of the circuital blocks 51, 53 and 54 and the decoder 70 of the known type for decoding the received signal, in accordance with the first embodiment of the invention.

A receiver 4 may also be implemented, comprising the discriminator 7 in accordance with the second embodiment of the invention and preferably an amplifier of the known type 55 placed between the turn L2 and the input of the discriminator 7.

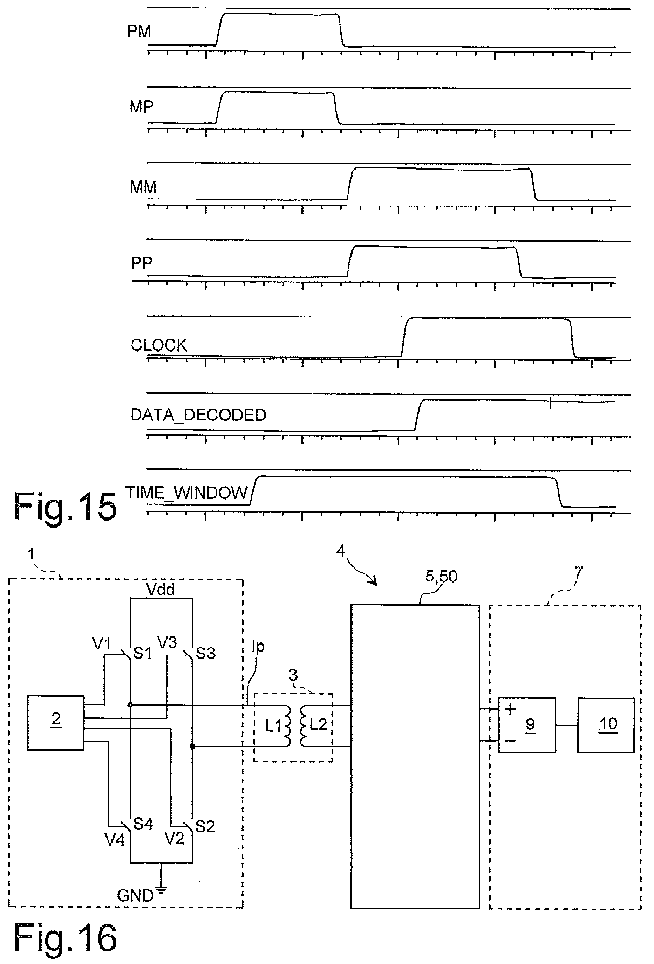

A receiver 4 may also be implemented, in accordance with a third embodiment of the invention, comprising both the input stage 5, 50 coupled to the turn L2 and provided with the disturbance rejection circuit 6 or the circuit consisting of the circuital blocks 51, 53 and 54, as denoted in the first embodiment of the invention and its variations, and the discriminator 7, as denoted in the second embodiment of the invention, to obtain a more disturbance-immune receiver 4, as shown in figure 16.

## Claims

1. A receiver (4) for a signal communication apparatus, said apparatus comprising a transmitter (1) for transmitting signals, said receiver (4) for receiving the signals and a galvanically isolated wireless interface (3) interposed between the transmitter and the receiver and comprising a transmitting antenna (L1) and a receiving antenna (L2), said receiver comprising an input stage (5, 50) for receiving the transmitted signal and another stage (70) to receive the signal deriving from the input stage, wherein said input stage comprises a disturbance rejection circuit (6, 52) coupled with the receiving antenna (L2) and configured for compensating for the parasite currents flowing between the transmitting antenna and the receiving antenna at the potential variations between the input and the output of the galvanic isolation interface by reducing the impedance of the input stage (5, 50), wherein said input stage is adapted to decrease the input impedance in the presence of parasite current due to common-mode transient and comprises means (53) adapted to change the bias of the input stage as a function of the parasite currents.

2. A receiver according to claim 1, wherein said circuit (6) comprises the series of two resistors (RMC1, RMC2) arranged between the terminals of said receiving antenna (L2) and means (61, 62) adapted to adjust the voltage (Vcm) between the common terminal of said resistors (RMC1, RMC2) and the ground (GND) with a reference voltage (REF1).

3. A receiver according to claim 2, wherein said means (61, 62) comprise a differential stage (61) having at the input said voltage (Vcm) between the common terminal of said resistors (RMC1, RMC2) and the ground (GND) and said reference voltage (REF 1), and being adapted to drive an transistor output stage (62) capable of modifying said voltage (Vcm) between the common terminal of said resistors (RMC1, RMC2) and the ground (GND).

4. A receiver according to claim 2, wherein said means (61, 62) comprise a differential stage (61) having at the input said voltage (Vcm) between the common terminal of said resistors (RMC1, RMC2) and the ground (GND) and said reference voltage (REF1), and being adapted to drive two transistor output stages (621, 622) capable of setting to the desired value the voltage at the ends of the series of said two resistors (RMC1, RMC2).

5. A receiver according to claim 1, wherein the receiver comprises an amplifier of the received signal (Ir), said amplifier being a wideband-voltage differential amplifier with a cut-off frequency substantially equal to double the band-centre frequency of the received signal (Ir), said amplifier comprising capacitive means (C1, C2) adapted to filter the direct current component of the output signal at the amplifier and keep it at the value required to allow the correct bias of the circuit downstream of the amplifier.

6. A receiver according to claim 1, wherein the receiver comprises an amplifier of the received signal (Ir), said amplifier comprising a fast comparator (82) fed back with an error amplifier (83) adapted to reset the offset of the received signal (Ir), said error amplifier being adapted to compare the output signal to the fast comparator (82) with a further reference signal (REF2) and keep the direct current component of the output signal of the amplifier at the value required to polarize the circuit downstream of the amplifier.

7. A receiver according to claim 1, wherein the receiver comprises a transimpedance stage (51) having the inputs bonded to the terminals of the receiving antenna (L2) and in that said disturbance rejection circuit (52) comprises first means (54) adapted to take up the parasite currents present on the terminals of the receiving antenna (L2), said means (53) adapted to change the bias of the input stage as a function of the parasite currents being adapted to modify the bias of the transimpedance stage (51) in order to balance the effect of the parasite currents present on the terminals of the receiving antenna (L2).

8. A receiver according to claim 7, wherein said first means (54) comprise two circuit branches consisting of the series of a PMOS transistor (MCC1, MCC2) and an NMOS transistor (MC1, MC2) bonded between the supply voltage (VDD) and the ground (GND) and having the drain terminal in common, the PMOS transistors being driven by a reference voltage (REF1) and the gate and drain terminals of the NMOS transistors being coupled to the terminals (IN1, IN2) of the receiving antenna (L2).

9. A receiver according to claim 8, wherein said transimpedance stage comprises two MOS transistors (MG1, MG2) having the gate terminal in common and the source terminals bonded to the ends of the receiving antenna, said second means comprising two MOS transistors (MF1, MF2) having the gate and drain terminals in common and the source terminals bonded to the ends of the receiving antenna, the gate terminals of the transistors of the second means and the transistors of the transimpedance stage being in common and bonded to a bias current generator (IB).

10. A receiver according to claim 8, wherein said transimpedance stage comprises two MOS transistors (MG1, MG2) having the gate terminal in common and the source terminals bonded to the ends of the receiving antenna, said second means comprising the series of two resistors (R101, R102) coupled to the terminals (IN1, IN2) of the receiving antenna (L2) and the series of first and second MOS transistor (MF11, MF22) each having the respective gate and drain terminals in common, the source terminal of the first MOS transistor (MF21) having the gate terminal bonded to the common terminal of said two resistors and to the source terminal of the second transistor (MF11), the drain terminal of the second transistor of the second means being in common with the gate terminals of the transistors of the transimpedance stage and bonded to a bias current generator (IB).

**Patentansprüche**

1. Empfänger (4) für eine Signalübertragungsvorrichtung, wobei die Vorrichtung aufweist: einen Sender (1) zum Senden von Signalen, den Empfänger (4) zum Empfangen der Signale sowie eine galvanisch getrennte Drahtlos-Schnittstelle (3), die zwischen dem Sender und dem Empfänger angeordnet ist und eine Sendeantenne (L1) und eine Empfangsantenne (L2) aufweist, wobei der Empfänger eine Eingangsstufe (5, 50) zum Empfangen des gesendeten Signals und eine weitere Stufe (70) zum Empfangen des von der Eingangsstufe kommenden Signals aufweist, wobei die Eingangsstufe eine Störunterdrückungsschaltung (6, 52) aufweist, die mit der Empfangsantenne (L2) gekoppelt ist und ausgebildet ist zum Kompensieren der parasitären Ströme, die zwischen der Sendeantenne und der Empfangsantenne bei den Potentialänderungen zwischen dem Eingang und dem Ausgang der galvanisch getrennten Schnittstelle fließen, durch Reduzieren der Impedanz der Eingangsstufe (5, 50), wobei die Eingangsstufe dazu ausgebildet ist, die Eingangsimpedanz in der Gegenwart von parasitärem Strom aufgrund eines Gleichtakt-Störsignals zu vermindern sowie Einrichtungen (53) aufweist, die zum Ändern der Vorspannung der Eingangsstufe als Funktion der parasitären Ströme ausgebildet sind.

2.  Empfänger nach Anspruch 1,
    wobei die Schaltung (6) die Reihenanordnung von zwei Widerständen (RMC1, RMC2), die zwischen den Anschlüssen der Empfangsantenne (L2) angeordnet sind, sowie Einrichtungen (61, 62) aufweist, die dazu ausgebildet sind, die Spannung (Vcm) zwischen dem gemeinsamen Anschluss der Widerstände (RMC1, RMC2) und Masse (GND) mittels einer Referenzspannung (REF1) einzustellen.

3.  Empfänger nach Anspruch 2,
    wobei die Einrichtungen (61, 62) eine Differentialstufe (61) aufweisen, die am Eingang die Spannung (VCM) zwischen dem gemeinsamen Anschluss der Widerstände (RMC1, RMC2) und Masse (GND) sowie die Referenzspannung (REF1) aufweist und dazu ausgebildet ist, eine Transistorausgangsstufe (62) anzusteuern, die zum Modifizieren der Spannung (Vcm) zwischen dem gemeinsamen Anschluss der Widerstände (RMC1, RMC2) und Masse (GND) in der Lage ist.

4.  Empfänger nach Anspruch 2,
    wobei die Einrichtungen (61, 62) eine Differentialstufe (61) aufweisen, die am Eingang die Spannung (Vcm) zwischen dem gemeinsamen Anschluss der Widerstände (RMC1, RMC2) und Masse (GND) sowie die Referenzspannung (REF1) aufweist und dazu ausgebildet ist, zwei Transistorausgangsstufen (621, 622) anzusteuern, die in der Lage sind, die Spannung an den Enden der Reihenanordnung der beiden Widerstände (RMC1, RMC2) auf den gewünschten Wert einzustellen.

5.  Empfänger nach Anspruch 1,
    wobei der Empfänger einen Verstärker für das empfangene Signal (Ir) aufweist, wobei der Verstärker ein Breitband-Spannungsdifferenzverstärker mit einer Grenzfrequenz im Wesentlichen gleich dem Doppelten der Bandmittenfrequenz des empfangenen Signals (Ir) ist, wobei der Verstärker kapazitive Einrichtungen (C1, C2) aufweist, die zum Filtern der Gleichstromkomponente des Ausgangssignals an dem Verstärker und zum Halten desselben auf dem Wert ausgebildet sind, der zum Ermöglichen der korrekten Vorspannung der Schaltung stromabwärts von dem Verstärker erforderlich ist.

6.  Empfänger nach Anspruch 1,
    wobei der Empfänger einen Verstärker für das empfangene Signal (Ir) aufweist, wobei der Verstärker einen schnellen Komparator (82) aufweist, der mit einem Fehlerverstärker (83) rückgekoppelt ist, der zum Zurücksetzen des Offset des empfangenen Signals (Ir) ausgebildet ist, wobei der Fehlerverstärker dazu ausgebildet ist, das Ausgangssignal an den schnellen Komparator (82) mit einem weiteren Referenzsignal (REF2) zu vergleichen und die Gleichstromkomponente des Ausgangssignals des Verstärkers auf dem Wert zu halten, der zur Polarisierung der Schaltung stromabwärts von dem Verstärker erforderlich ist.

7.  Empfänger nach Anspruch 1,
    wobei der Empfänger eine Transimpedanzstufe (51) aufweist, bei der die Eingänge mit den Anschlüssen der Empfangsantenne (L2) verbunden sind, und wobei die Störunterdrückungsschaltung (52) erste Einrichtungen (54) aufweist, die zum Aufnehmen der parasitären Ströme ausgebildet sind, die an den Anschlüssen der Empfangsantenne (L2) vorhanden sind, wobei die Einrichtungen (53) zum Ändern der Vorspannung der Eingangsstufe als Funktion der parasitären Ströme dazu ausgebildet sind, die Vorspannung der Transimpedanzstufe (51) zu ändern, um die Wirkung der an den Anschlüssen der Empfangsantenne (L2) vorhandenen parasitären Ströme zu kompensieren.

8.  Empfänger nach Anspruch 7,
    wobei die ersten Einrichtungen (54) zwei Schaltungszweige aufweisen, die aus der Reihenanordnung eines PMOS-Transistors (MCC1, MCC2) und eines NMOS-Transistors (MC1, MC2) bestehen, die zwischen die Versorgungsspannung (VDD) und Masse (GND) geschaltet sind und die den Drain-Anschluss gemeinsam haben, wobei die PMOS-Transistoren durch eine Referenzspannung (REF1) angesteuert werden, und die Gate- und Drain-Anschlüsse der NMOS-Transistoren mit den Anschlüssen (IN1, IN2) der Empfangsantenne (L2) gekoppelt sind.

9.  Empfänger nach Anspruch 8,
    wobei die Transimpedanzstufe zwei MOS-Transistoren (MG1, MG2) aufweist, die den Gate-Anschluss gemeinsam haben und bei denen die Source-Anschlüsse mit den Enden der Empfangsantenne verbunden sind, wobei die zweiten Einrichtungen zwei MOS-Transistoren (MF1, MF2) aufweisen, die die Gate- und Drain-Anschlüsse gemeinsam haben und bei denen die Source-Anschlüsse mit den Enden der Empfangsantenne verbunden sind, wobei die Gate-Anschlüsse der Transistoren der zweiten Einrichtungen und die Transistoren der Transimpedanzstufe gemeinsam vorgesehen sind und mit einem Vorspannungsstromgenerator (IB) verbunden sind.

10. Empfänger nach Anspruch 8,
wobei die Transimpedanzstufe zwei MOS-Transistoren (MG1, MG2) aufweist, die den Gate-Anschluss gemeinsam haben und bei denen die Source-Anschlüsse mit den Enden der Empfangsantenne verbunden sind, wobei die zweiten Einrichtungen die Reihenanordnung von zwei Widerständen (R101, R102) aufweisen, die mit den Anschlüssen (IN1, IN2) der Empfangsantenne (L2) gekoppelt sind, und wobei die Reihenanordnung aus dem ersten und zweiten MOS-Transistor (MF11, MF22) jeweilige Gate- und Drain-Anschlüsse gemeinsam haben, wobei der Source-Anschluss des ersten MOS-Transistors (MF21) mit dem Gate-Anschluss mit dem gemeinsamen Anschluss der beiden Widerstände und mit dem dem Source-Anschluss des zweiten Transistors (MF11) verbunden ist, wobei der Drain-Anschluss des zweiten Transistors der zweiten Einrichtungen mit den Gate-Anschlüssen der Transistoren der Transimpedanzstufe gemeinsam vorgesehen ist und mit einem Vorspannungsstromgenerator (IB) verbunden ist.

**Revendications**

1. Récepteur (4) pour un appareil de communication de signaux, ledit appareil comprenant un émetteur (1) pour transmettre des signaux, ledit récepteur (4) étant destiné à recevoir les signaux et une interface sans fil isolée de façon galvanique (3) intercalée entre l'émetteur et le récepteur et comprenant une antenne émettrice (L1) et une antenne réceptrice (L2), ledit récepteur comprenant un étage d'entrée (5, 50) destiné à recevoir le signal émis et un autre étage (70) destiné à recevoir le signal provenant de l'étage d'entrée, dans lequel ledit étage d'entrée comprend un circuit de suppression d'interférences (6, 52) couplé à l'antenne réceptrice (L2) et configuré pour compenser les courants parasites qui circulent entre l'antenne émettrice et l'antenne réceptrice au niveau des variations potentielles entre l'entrée et la sortie de l'interface d'isolation galvanique en réduisant l'impédance de l'étage d'entrée (5, 50), dans lequel ledit étage d'entrée est adapté pour diminuer l'impédance d'entrée en présence d'un courant parasite dû aux transitoires de mode commun et comprend un moyen (53) adapté pour modifier la polarisation de l'étage d'entrée en fonction des courants parasites.

2. Récepteur selon la revendication 1, dans lequel ledit circuit (6) comprend la série de deux résistances (RMC1, RMC2) placées entre les bornes de ladite antenne réceptrice (L2) et un moyen (61, 62) adapté pour ajuster la tension (Vcm) entre la borne commune desdites résistances (RMC1, RMC2) et la masse (GND) avec une tension de référence (REF1).

3. Récepteur selon la revendication 2, dans lequel ledit moyen (61, 62) comprend un étage différentiel (61) ayant en entrée ladite tension (Vcm) entre la borne commune desdites résistances (RMC1, RMC2) et la masse (GND) et ladite tension de référence (REF1), et étant adapté pour piloter un étage de sortie de transistor (62) capable de modifier ladite tension (Vcm) entre la borne commune desdites résistances (RMC1, RMC2) et la masse (GND).

4. Récepteur selon la revendication 2, dans lequel ledit moyen (61, 62) comprend un étage différentiel (61) ayant en entrée ladite tension (Vcm) entre la borne commune desdites résistances (RMC1, RMC2) et la masse (GND) et ladite tension de référence (REF1), et étant adapté pour piloter deux étages de sortie de transistor (621, 622) capables de mettre à la valeur souhaitée la tension aux extrémités de la série desdites deux résistances (RMC1, RMC2).

5. Récepteur selon la revendication 1, dans lequel le récepteur comprend un amplificateur du signal reçu (Ir), ledit amplificateur étant un amplificateur différentiel de tension à large bande avec une fréquence de coupure substantiellement égale au double de la fréquence médiane de bande du signal reçu (Ir), ledit amplificateur comprenant un moyen capacitif (C1, C2) adapté pour filtrer la composante continue du signal de sortie de l'amplificateur et pour la maintenir à la valeur nécessaire pour permettre la polarisation correcte du circuit situé en aval de l'amplificateur.

6. Récepteur selon la revendication 1, dans lequel le récepteur comprend un amplificateur du signal reçu (Ir), ledit amplificateur comprenant un comparateur rapide (82) recevant la rétroaction d'un amplificateur d'erreur (83) adapté pour remettre à zéro le décalage du signal reçu (Ir), ledit amplificateur d'erreur étant adapté pour comparer le signal de sortie transmis au comparateur rapide (82) avec un autre signal de référence (REF2) et pour maintenir la composante continue du signal de sortie de l'amplificateur à la valeur nécessaire pour polariser le circuit situé en aval de l'amplificateur.

7. Récepteur selon la revendication 1, dans lequel le récepteur comprend un étage de transimpédance (51) dont les entrées sont reliées aux bornes de l'antenne réceptrice (L2) et dans lequel ledit circuit de suppression d'interférences (52) comprend un premier moyen (54) adapté pour supporter les courants parasites présents sur les bornes de l'antenne réceptrice (L2), ledit moyen (53) adapté pour modifier la polarisation de l'étage d'entrée en fonction des courants parasites étant adapté pour modifier la polarisation de l'étage de transimpédance (51) afin d'équilibrer l'effet des courants parasites présents sur les bornes de l'antenne réceptrice (L2).

8. Récepteur selon la revendication 7, dans lequel ledit premier moyen (54) comprend deux branches de circuit consistant en la série d'un transistor PMOS (MCC1, MCC2) et d'un transistor NMOS (MC1, MC2) reliés entre la tension d'alimentation (VDD) et la masse (GND) et ayant la borne de drain en commun, les transistors PMOS étant pilotés par une tension de référence (REF1) et les bornes de grille et de drain des transistors NMOS étant couplées aux bornes (IN1, IN2) de l'antenne réceptrice (L2).

9. Récepteur selon la revendication 8, dans lequel ledit étage de transimpédance comprend deux transistors MOS (MG1, MG2) dont la borne de grille est en commun et les bornes de source sont reliées aux extrémités de l'antenne réceptrice, ledit deuxième moyen comprenant deux transistors MOS (MF1, MF2) dont les bornes de grille et de drain sont en commun et les bornes de source sont reliées aux extrémités de l'antenne réceptrice, les bornes de grille des transistors du deuxième moyen et des transistors de l'étage de transimpédance étant en commun et reliées à un générateur de courant de polarisation (IB).

10. Récepteur selon la revendication 8, dans lequel ledit étage de transimpédance comprend deux transistors MOS (MG1, MG2) dont la borne de grille est en commun et les bornes de source sont reliées aux extrémités de l'antenne réceptrice, ledit deuxième moyen comprenant la série de deux résistances (R101, R102) couplées aux bornes (IN1, IN2) de l'antenne réceptrice (L2) et la série d'un premier et un deuxième transistor MOS (MF11, MF22) ayant chacun les bornes de grille et de drain respectives en commun, la borne de source du premier transistor MOS (MF21) ayant la borne de grille reliée à la borne commune desdites deux résistances et à la borne de source du deuxième transistor (MF11), la borne de drain du deuxième transistor du deuxième moyen étant en commun avec les bornes de grille des transistors de l'étage de transimpédance et étant reliée à un générateur de courant de polarisation (IB).

Fig.1

Fig.2

# Fig.3

# Fig.4

# Fig.5

# Fig.6a

Fig.6b

Fig.10b

Fig.7

Fig.8

Fig.9

Fig.10

Fig.11

Fig.13

Fig.12

Fig.14

PM

MP

MM

PP

CLOCK

DATA_DECODED

## Fig.15    TIME_WINDOW

## Fig.16

**EP 2 282 406 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080311862 A
- US 20080069249 A
- EP 1087333 A2
- US 5568561 A1
- US 5389778 A
- US 2005110700 A1